# EUROPÄISCHE PATENTANMELDUNG

(11) **EP 3 744 508 A1**
(43) Veröffentlichungstag der Anmeldung: **02.12.2020**
(21) Anmeldenummer: 20175431.4
(22) Anmeldetag: 19.05.2020
(51) Int. Cl.: B29C 64/165, B29C 64/245, B29C 64/255, B29C 64/35, B33Y 10/00, B33Y 30/00, B33Y 99/00, B60V 3/02

(54) **ANORDNUNG ZUR HERSTELLUNG WENIGSTENS EINES DREIDIMENSIONALEN BAUTEILS FÜR DIE BAUINDUSTRIE**

(30) Priorität: 29.05.2019 AT 504982019
(71) Anmelder: Progress Maschinen & Automation AG, 39042 Brixen (IT)
(72) Erfinder: STOFNER, Helmut, 39058 Sarntal (IT); ENDERES, Karl Friedrich, 39042 Brixen (IT)
(74) Vertreter: Torggler & Hofinger Patentanwälte

(57) **Zusammenfassung**

Anordnung (1) zur Herstellung wenigstens eines dreidimensionalen Bauteils (2) für die Bauindustrie, umfassend
- wenigstens eine Druckplattform (3),
- eine Druckvorrichtung (4) mit wenigstens einer Materialauftragsvorrichtung zur schichtweisen Auftragung wenigstens einen Partikelmaterials (5) auf der Druckplattform (3) und wenigstens einem Druckkopf zur Abgabe wenigstens eines Bindemittels an örtlich vorbestimmten Bereichen, um das wenigstens eine Partikelmaterial (5) in den örtlich vorbestimmten Bereichen zu verfestigen und miteinander zum wenigstens einen dreidimensionalen Bauteil (2) zu verbinden, wobei die wenigstens eine Druckplattform (3) zumindest bereichsweise in der Druckvorrichtung (4) anordenbar ist, und
- wenigstens eine Transportvorrichtung (6) zur Entnahme der wenigstens einen Druckplattform (3) aus der Druckvorrichtung (4),
wobei die wenigstens eine Transportvorrichtung (6) wenigstens eine Druckluftzufuhr (7) und wenigstens ein, vorzugsweise wenigstens drei, Luftkissen (8), umfasst, welches über die wenigstens eine Druckluftzufuhr (7) mit Druckluft beaufschlagbar ist, um einen Luftfilm zu einem Untergrund (9) auszubilden, sodass die wenigstens eine Druckplattform (3) erschütterungsfrei der Druckvorrichtung (4) entnehmbar ist.

## Beschreibung

Die Erfindung betrifft eine Anordnung zur Herstellung wenigstens eines dreidimensionalen Bauteils für die Bauindustrie, umfassend wenigstens eine Druckplattform, eine Druckvorrichtung mit wenigstens einer Materialauftragsvorrichtung zur schichtweisen Auftragung wenigstens einen Partikelmaterials auf der Druckplattform und wenigstens einem Druckkopf zur Abgabe wenigstens eines Bindemittels an örtlich vorbestimmten Bereichen, um das wenigstens eine Partikelmaterial in den örtlich vorbestimmten Bereichen zu verfestigen und miteinander zum wenigstens einen dreidimensionalen Bauteil zu verbinden, wobei die wenigstens eine Druckplattform zumindest bereichsweise in der Druckvorrichtung anordenbar ist, und wenigstens eine Transportvorrichtung zur Entnahme der wenigstens einen Druckplattform aus der Druckvorrichtung. Die Erfindung betrifft weiterhin ein Verfahren zur Herstellung wenigstens eines dreidimensionalen Bauteils für die Bauindustrie in einer solchen Anordnung sowie die Verwendung wenigstens einer Transportvorrichtung.

Anordnungen zur Herstellung wenigstens eines dreidimensionalen Bauteils für die Bauindustrie sind bereits aus dem Stand der Technik bekannt. Die WO 2017/177603 A1 offenbart beispielsweise eine Anordnung, bei welcher eine Druckplattform über Laurollenbänder und Hubvorrichtungen bewegt wird.

Nachteilig an diesen Lösungen ist, dass es beim Transport der Druckplattform zu Erschütterungen kommt. Diese können bei frisch gedruckten, noch "grünen" Bauteilen, die auf der Druckplattform angeordnet sind, Beschädigungen an den Bauteilen verursachen. Dies hat vor allem mit den Eigenschaften der im Bauwesen eingesetzten Bindemittel zu tun, die je nach Art und Einsatzbereich eine etwas längere Erstarrungszeit und Aushärtungszeit benötigen.

Um Beschädigungen beim Transport zu vermeiden, könnte man natürlich die Druckplattform solange in der Druckvorrichtung belassen, bis das gedruckte Bauteil ausreichend ausgehärtet ist, sodass Erschütterungen unkritisch sind. Allerdings ist die Druckvorrichtung in dieser Zeit blockiert.

Die Aufgabe der vorliegenden Erfindung besteht darin, die Nachteile des Stands der Technik zumindest teilweise zu beheben, und eine verbesserte Anordnung, ein darauf basierendes Verfahren und eine Verwendung wenigstens einer Transportvorrichtung anzugeben, die es gestatten, die wenigstens eine Druckplattform mitsamt wenigstens einem darauf angeordneten dreidimensionalen Bauteil für die Bauindustrie der Druckvorrichtung unmittelbar oder nur mit einem geringen Zeitversatz nach Abschluss des Druckvorgangs zu entnehmen, ohne dass dabei das Gefüge des frisch produzierten Bauteils geschädigt wird.

Diese Aufgabe wird gelöst durch die Merkmale der Ansprüche 1, 14 und 15.

Bei der erfindungsgemäßen Anordnung ist es demnach vorgesehen, dass die wenigstens eine Transportvorrichtung wenigstens eine Druckluftzufuhr und wenigstens ein, vorzugsweise wenigstens drei, Luftkissen, umfasst, welches über die wenigstens eine Druckluftzufuhr mit Druckluft beaufschlagbar ist, um einen Luftfilm zu einem Untergrund auszubilden, sodass die wenigstens eine Druckplattform erschütterungsfrei der Druckvorrichtung entnehmbar ist.

Luftkissen, auch Luftgleitkissen genannt, sind eine Art von Fluidgleitkissen, welche Druckluft als Gleitmedium verwenden. Sie erzeugen hierbei einen dünnen Luftfilm von z.B. 0,01 mm, auf welchem die Last quasi schwebt und sich in alle Richtungen frei bewegen und drehen lässt. In der Ruhestellung stützt sich die auf dem oder den Luftkissen angeordnete Last auf dem Untergrund ab. Wird das Luftkissen mit Druckluft beaufschlagt, so bläst sich üblicherweise ein ringförmiger Gummibalg auf und dichtet den Innenraum zum Untergrund hin ab. Dort bildet sich eine Druckkammer, welche die Last anhebt.

Die Luftkissen führen dabei üblicherweise einen kleinen Hub z.B. 10-80 mm aus, welcher vom Durchmesser des Luftkissens abhängig ist. Sobald der Luftdruck der Kammer den Gegendruck der Last übersteigt, entweicht etwas Luft im Umkreis des Balges und es entsteht ein dünner Luftfilm, welcher die Last zum Schweben bringt. Nun kann die Last fast ohne Reibung in beliebige Richtungen bewegt werden.

Üblicherweise ist das Luftkissen oder sind die Luftkissen gelenkig gelagert und können dadurch geringe Bodenwellen ausgleichen.

Für einen optimalen Betrieb kann ein Arbeitsdruck von z.B. 1 - 2 bar verwendet werden. Steht nur wenig Einbauplatz zur Verfügung, so empfiehlt sich der Einsatz von 4 bar-Luftkissen. Diese besitzen bei gleichen Abmessungen die doppelte Tragfähigkeit wie die 2 bar-Typen. Der Luftverbrauch und der Luftdruck hängt auch von der Beschaffenheit des Untergrunds ab. Die Druckplattform selbst ist in der Regel eine biegesteife Konstruktion.

Ein wesentlicher Aspekt der gegenständlichen Erfindung besteht also darin, dass der Transportvorgang der frisch gedruckten dreidimensionalen Bauteile, welche auf der wenigstens einen Druckplattform angeordnet sind, mit Hilfe von einem Luftgleit-Transport-System zu bewerkstelligen. Dieses Luftgleit-Transport-System kann komfortabel von Menschenhand bedient werden oder es kann autonom selbstfahrend agieren.

Der Reibungskoeffizient zwischen Boden und Transportsystem wird üblicherweise auf 0,001 herabgesetzt, was bedeutet, dass es für die horizontale Bewegung einer Last von z.B. 1000 kg eine horizontale Druckkraft von 1 kg bzw. 10 N braucht. Somit ist eine einzige Person in der Lage, sehr schwere Lasten in alle Richtungen zu verschieben oder um die eigene Achse zu drehen. Dies ist für das technische Gebiet des 3D Drucks in der Bauindustrie, auf welchem die gegenständliche Erfindung angesiedelt ist, von Vorteil, da in der Bauindustrie stets große Massen zu bewegen sind. Die hohe Manövrierfähigkeit des Luftkissentransportsystems ermöglicht eine effiziente und variable Ausnutzung eines Fabrikgebäudes.

Ein weiterer Vorteil besteht darin, dass durch ein Luftkissentransportsystem eine Produktionsanlage mühelos hochskaliert und so sehr wirtschaftlich gestaltet werden kann.

Luftkissentransportsysteme können auch sehr flach und kompakt ausgeführt werden, was sehr vorteilhaft für die gesamte Unterkonstruktion-Basis der wenigstens einen Druckplattform ist. Der durch die platzsparende Konstruktion frei gewordene Raum kann vorteilhaft für andere Vorrichtungen genutzt werden.

Für eine gute Stabilität zu erreichen, bietet es sich an, mehr als ein Luftkissen, bevorzugt wenigstens drei Luftkissen, zu verwenden. Außerdem hat es sich in diesem Zusammenhang als vorteilhaft erwiesen, die Luftkissenmodule so unter der wenigstens einen Druckplattform zu platzieren, dass sie weit auseinanderliegen. Dabei sollte der Lastschwerpunkt möglichst zentrisch über dem System angeordnet sein.

Die Luftkissenmodule können über Schnellverschlüsse mit Schläuchen an ein Steuerpult angeschlossen sein. Die Druckluftversorgung der Luftkissen kann durch ein internes Netz erfolgen und ist in den meisten Fabriken vorhanden. Die Drucklufterzeugung ist zwar im Vergleich zu konventionellen Transportsystemen mit größeren Kosten verbunden, jedoch ist das Luftkissensystem üblicherweise nicht im Dauereinsatz, sondern wird nur bei Bedarf, wenn eine Druckplattform zu bewegen ist, verwendet. Am Steuerpult können sich Ventile befinden, welche den Luftstrom in den Kissen regeln. Die Regelung kann von einer Person von Hand oder automatisiert erfolgen. Die Ventile können nacheinander geöffnet und der Luftdruck allmählich erhöht werden, bis die Luftkissenmodule gemeinsam die Last anheben und auf einem Luftfilm über dem Boden schweben.

Weitere Vorteile eines Luftgleit-Transport-Systems gegenüber z.B. schienengebundenen Systemen oder bodenberührenden Systemen, wie z.B. Rädern, sind:
- Es reicht ein fester, ebener und glatter Untergrund, wie er in den meisten Produktionsstätten vorhanden ist, aus.
- Es sind keine zusätzlichen Aufbauten, wie Schienen, Laufrollen usw. notwendig. Dadurch können gleichzeitig flexible Anordnungen realisiert werden, da es keiner fixen Installationen wie Schienen, Förderbänder, Kräne usw. bedarf. Außerdem müssen nur vergleichsweise geringe Investitionskosten getätigt werden.
- Es sind großen Lasten, von bis zu 1000 Tonnen, transportierbar.
- Es ist eine wirtschaftliche und effiziente Arbeitsweise möglich.
- Die zu transportierende Last kann auf eine größere Bodenfläche als z.B. bei Rädern verteilt werden, was mit einer reduzierten Bodenpressung verbunden ist.
- Das System ist benutzer- und wartungsfreundlich.
- Es ist eine effiziente Ausnutzung der Flächen in der Fabrikplanung und im Hallenlayout möglich, was zu einer Reduzierung der Gesamtinvestitionskosten bei einem Neubau führt.
- Insgesamt können die Durchlaufzeiten verringert und die Produktivität bei geringeren Investitionskosten erhöht werden.

Gemäß einer vorteilhaften Ausführungsform ist es vorgesehen, dass die wenigstens eine Transportvorrichtung als integraler Bestandteil der wenigstens einen Druckplattform ausgebildet ist, oder wobei wenigstens eine Schnittstelle vorgesehen ist, über welche die wenigstens eine Transportvorrichtung mit der wenigstens einen Druckplattform koppelbar ist. In einer Produktionsanlage kann auch eine Mischform verwendet werden, also sowohl Druckplattformen mit integrierter Transportvorrichtung als auch Druckplattformen, die über eine Schnittstelle mit wenigstens einer gesonderten Transportvorrichtung koppelbar sind.

Es bietet sich an, dass die Anordnung wenigstens eine Vorrichtung zur Erzeugung von Druckluft umfasst. Diese Vorrichtung kann beispielsweise einen Kompressor umfassen.

In diesem Zusammenhang hat es sich als vorteilhaft herausgestellt, dass die wenigstens eine Vorrichtung zur Erzeugung von Druckluft stationär angeordnet ist und über wenigstens eine Fluidleitung mit der wenigstens einen Druckluftzufuhr der wenigstens einen Transportvorrichtung verbunden ist, vorzugsweise wobei die wenigstens eine Fluidleitung zumindest abschnittsweise oberhalb der wenigstens einen Transportvorrichtung angeordnet ist, und/oder wenigstens einen Ausgleichsabschnitt zum Ausgleich einer Dehnung der Fluidleitung in Längsrichtung aufweist.

Alternativ kann es vorgesehen sein, dass die wenigstens eine Vorrichtung zur Erzeugung von Druckluft bewegungsgekoppelt mit der wenigstens einen Transportvorrichtung verbunden ist.

Die Luftversorgung kann also über eine Verbindung mit einem Luftschlauch erfolgen oder die notwendige Druckluft kann auf dem Transportfahrzeug selbst erzeugt werden. Dies ist insbesondere bei selbstfahrenden Transportvorrichtungen besonders vorteilhaft, da auf diese Weise ein hoher Grad an Autonomie ermöglicht werden kann.

Es hat sich als günstig erwiesen, dass die wenigstens eine Transportvorrichtung wenigstens einen Antrieb umfasst, über welchen die wenigstens eine Transportvorrichtung relativ zum Untergrund antreibbar ist.

Dabei kann es sich beispielsweise um einen pneumatischen, elektrischen oder elektromagnetischen Antrieb handeln. Der Antrieb kann vorzugsweise eigenständig in jede Richtung fahren. In einem automatisierten Betrieb kann die wenigstens eine Transportvorrichtung die wenigstens eine Druckplattform an einem Punkt A hochheben, nach Punkt B transportieren und dort wieder absetzen. Dadurch wird es möglich, mit wenigen Plattformen eine gesamte Umlaufanlage zu betreiben.

Der Antrieb kann in die wenigstens eine Transportvorrichtung integriert sein. Alternativ oder ergänzend dazu kann auch ein externer Antrieb zum Einsatz kommen, beispielsweise in Form eines sogenannten Movers, welche mit einem Luft-oder Elektromotor-Antrieb versehen sein können.

Der Fahrantrieb des Luftkissensystems kann also z.B. in den folgenden Varianten ausgeführt werden:
- externer Antrieb über einen Mover
- ferngelenkter interner Fahrantrieb
- fahrerloses, autonom agierendes Luftkissensystem

In diesem Zusammenhang hat es sich als vorteilhaft erwiesen, dass wenigstens eine Steuerungsvorrichtung vorgesehen ist, die dazu eingerichtet ist, die wenigstens eine Transportvorrichtung autonom relativ zumindest zur Druckvorrichtung zu bewegen.

In bevorzugten Ausführungsformen umfasst die Anordnung
- wenigstens eine Härtekammer, in welcher die wenigstens eine Druckplattform zur Aushärtung des wenigstens einen dreidimensionalen Bauteils zwischenspeicherbar ist, und wobei die Druckplattform mittels der wenigstens einen Transportvorrichtung der wenigstens einen Härtekammer zuführbar und entnehmbar ist, und/oder
- wenigstens eine Entpackstation, in welcher die wenigstens eine Druckplattform zur Entnahme des wenigstens einen dreidimensionalen Bauteils, und vorzugsweise zum Abtransport von nichtgebundenem Partikelmaterial, zwischenspeicherbar ist, und wobei die Druckplattform mittels der wenigstens einen Transportvorrichtung der wenigstens einen Entpackstation zuführbar und entnehmbar ist.

Insbesondere um das Ein- und Ausfädeln der wenigstens einen Druckplattform zu erleichtern, hat es sich als günstig erwiesen, dass die Druckvorrichtung, die wenigstens eine Druckplattform, die wenigstens eine Transportvorrichtung und/oder wenigstens eine optional vorgesehene Härtekammer und/oder Entpackstation wenigstens eine seitlich angeordnete Führungsvorrichtung zur seitlichen Führung der wenigstens einen Druckplattform aufweist.

Um die Trennung eines gedruckten Bauteils von losem umgebendem Partikelmaterial zu erleichtern, bietet es sich an, dass die wenigstens eine Druckplattform Öffnungen, über welche nichtgebundenes Partikelmaterial der wenigstens einen Druckplattform ableitbar ist, und wenigstens einen Verschlussmechanismus zum, vorzugsweise automatischen, Verschließen der Öffnungen aufweist.

Um eine stabile Abstützung auf dem Untergrund und/oder in der Druckvorrichtung und/oder anderen etwaigen Stationen einer Produktionsanlage zu erzielen, hat es sich als günstig herausgestellt, dass die wenigstens eine Druckplattform wenigstens eine Abstützvorrichtung zur Abstützung der wenigstens einen Druckplattform auf dem Untergrund aufweist.

Eine besonders effiziente und zeitsparende Arbeitsweise ist dadurch realisierbar, dass die Druckvorrichtung einen Ausgang, über welchen die wenigstens eine Druckplattform der Druckvorrichtung entnehmbar ist, und vorzugsweise einen Eingang, über welchen die wenigstens eine Druckplattform der Druckvorrichtung zuführbar ist, aufweist.

Eine vorteilhafte Ausführungsform ist dadurch gekennzeichnet, dass wenigstens eine Vorrichtung zum Abtransport von nichtgebundenem Partikelmaterial vorgesehen ist, vorzugsweise wobei die wenigstens eine Vorrichtung zum Abtransport in die wenigstens eine Druckplattform integriert ist oder zumindest bereichsweise in einer Ausnehmung im Untergrund angeordnet ist, und/oder wobei die wenigstens eine Vorrichtung zum Abtransport wenigstens eine Trogschnecke und/oder einen Trichter umfasst.

Da das Luftkissen-Transportsystem in einer mit Stäuben kontaminierten Umgebung zum Einsatz kommt, bietet es sich an, dass die wenigstens eine Transportvorrichtung wenigstens eine Abschirmvorrichtung aufweist, über welche das wenigstens eine Luftkissen von Staub und/oder von nichtgebundenem Partikelmaterial abschirmbar ist, vorzugsweise wobei die wenigstens eine Abschirmvorrichtung wenigstens eine flexible Schürze, Lamellen und/oder Bürsten umfasst, welche die wenigstens eine Transportvorrichtung zumindest teilweise umgeben.

Wie eingangs ausgeführt, wird Schutz auch begehrt für ein Verfahren zur Herstellung wenigstens eines dreidimensionalen Bauteils für die Bauindustrie in einer erfindungsgemäßen Anordnung, wobei in einem ersten Verfahrensschritt wenigstens ein dreidimensionales Bauteil auf der wenigstens einen Druckplattform in der wenigstens einen Druckvorrichtung gedruckt wird, und in einem zweiten Verfahrensschritt die wenigstens eine Druckplattform aus der Druckvorrichtung mittels der wenigstens einen Transportvorrichtung erschütterungsfrei entnommen wird.

Und schließlich wird Schutz begehrt für eine Verwendung wenigstens einer Transportvorrichtung, welche wenigstens eine Druckluftzufuhr und wenigstens ein, vorzugsweise wenigstens drei, Luftkissen, umfasst, welches über die wenigstens eine Druckluftzufuhr mit Druckluft beaufschlagbar ist, um einen Luftfilm zu einem Untergrund auszubilden, zur Entnahme wenigstens einer Druckplattform aus einer Druckvorrichtung mit wenigstens einer Materialauftragsvorrichtung zur schichtweisen Auftragung wenigstens einen Partikelmaterials auf der Druckplattform und wenigstens einem Druckkopf zur Abgabe wenigstens eines Bindemittels an örtlich vorbestimmten Bereichen, um das wenigstens eine Partikelmaterial in den örtlich vorbestimmten Bereichen zu verfestigen und miteinander zu wenigstens einem dreidimensionalen Bauteil für die Bauindustrie zu verbinden.

Weitere Einzelheiten und Vorteile der Erfindung werden anhand der Figurenbeschreibung unter Bezugnahme auf die Zeichnungen im Folgenden näher erläutert. Darin zeigen:
- Fig. 1: eine Luftkissentransportvorrichtung, die von einer Bedienperson geführt wird, samt einer an einer Hallendecke fixierten Druckluftversorgung in einer schematisch dargestellten Seitansicht,
- Fig. 2: eine autonome Luftkissentransportvorrichtung mit einer eigenen Druckluftversorgung in einer schematisch dargestellten Seitansicht,
- Fig. 3: eine Druckplattform, die auf einer Transportvorrichtung angeordnet ist, in einer schematischen Querschnittsdarstellung,
- Fig. 4: eine schematisch dargestellte Prinzipskizze einer Luftkissentransportvorrichtung,
- Fig. 5: eine schematische Darstellung einer Anordnung zur Herstellung wenigstens eines dreidimensionalen Bauteils für die Bauindustrie gemäß einem bevorzugten Ausführungsbeispiel,
- Fig. 6: eine Druckplattform mit einer integrierten Transportvorrichtung in einer schematischen Querschnittsdarstellung,
- Fig. 7: eine Druckplattform, die über einer stationär im Untergrund angeordneten Trogschnecke positioniert ist, in einer schematischen Querschnittsdarstellung, und
- Fig. 8: eine Luftkissentransportvorrichtung mit einer Abschirmvorrichtung in einer schematischen Querschnittsdarstellung.

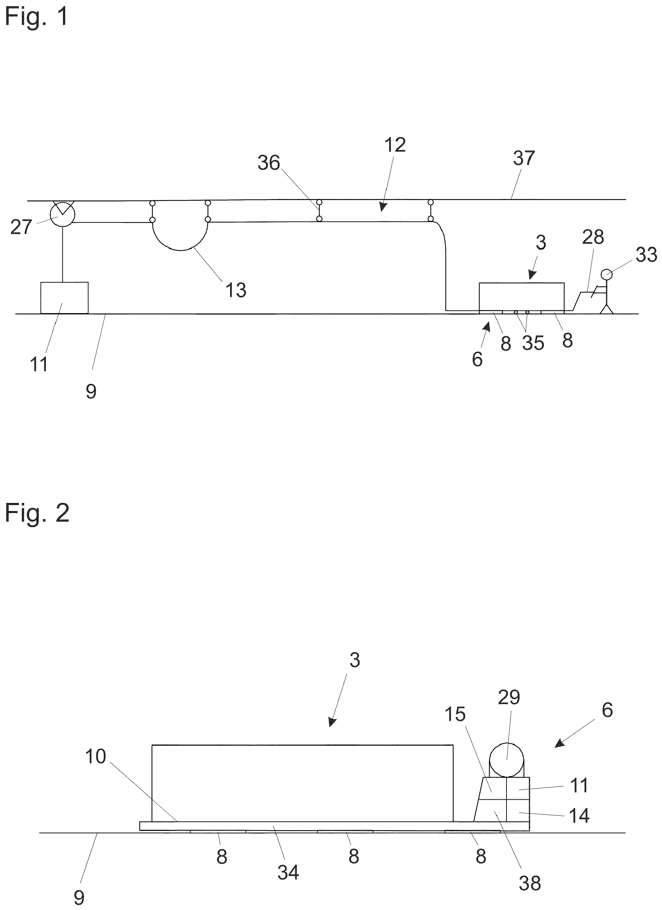

Die Figur 1 zeigt eine Luftkissentransportvorrichtung 6, die von einer Bedienperson 33 geführt wird. Die Transportvorrichtung 6 umfasst wenigstens eine Druckluftzufuhr 7 und wenigstens ein, vorzugsweise wenigstens drei, Luftkissen 8, welches über die wenigstens eine Druckluftzufuhr 7 mit Druckluft beaufschlagbar ist, um einen Luftfilm zu einem Untergrund 9 auszubilden, sodass eine auf der Transportvorrichtung 6 angeordnete Druckplattform 3 erschütterungsfrei mittels der Transportvorrichtung 6 bewegbar ist.

Es ist eine Vorrichtung 11 zur Erzeugung von Druckluft vorgesehen, welche stationär, z.B. auf dem Untergrund 9 in Form eines Hallenbodens angeordnet ist und über eine Fluidleitung 12 mit der Druckluftzufuhr 7 der Transportvorrichtung 6 verbunden ist, wobei die Fluidleitung 12 abschnittsweise oberhalb der Transportvorrichtung 6 angeordnet ist. Die Fluidleitung 12 kann dabei über Aufhängungen 36 an der Hallendecke 37 entlang geführt sein.

Die Fluidleitung 12 umfasst einen Ausgleichsabschnitt 13 zum Ausgleich einer Dehnung der Fluidleitung 12 in Längsrichtung.

Die Fluidleitung 12 kann wie im dargestellten Fall zumindest abschnittsweise auf eine Schlauchtrommelrolle 27 aufgewickelt sein. Diese ist vorzugsweise ebenfalls an der Hallendecke 37 angeordnet.

Die Transportvorrichtung 6 weist wenigstens ein Griffelement 28 auf, über welches die Transportvorrichtung 6 von einer Bedienperson 33 bewegbar ist. Ergänzend kann wie im dargestellten Fall ein Antrieb 14 vorgesehen sein, über welchen die Transportvorrichtung 6 relativ zum Untergrund 9 antreibbar ist. Dieser Antrieb 14 kann beispielsweise auf ein Antriebsrad 35 oder mehrere Antriebsräder 35 wirken.

Die Versorgung mit dem Medium Luft wird im dargestellten Fall also über eine Fluidleitung 12 in Form eines Luftschlauchs gelöst. Die Luft kann entweder über einen automatischen Schlauchaufroller oder - wie im dargestellten Fall - über ein an der Decke befestigtes System zugeführt werden. Der Hauptversorgungsschlauch kann mit Hilfe von an der Decke 37 montierten Schienen und Aufhängungen 36 bewegt werden, um so ein für den Nutzer 33 leichtgängiges System zu schaffen.

An den Untergrund 9 werden besondere Anforderungen gestellt, da der Luftspalt zwischen Luftkissenbalg 8 und Fußboden 9 hauchdünn ist. Die Beschaffenheit der Fußbodenoberfläche beeinflusst direkt den Luftverbrauch. Um den Überdruck in der Auftriebskammer zu halten, sollten aus dem Untergrund 9 keine scharfkantigen Stufen hochstehen und es sollte keine Risse oder Löcher im Untergrund 9 geben, durch die die Druckluft entweichen kann. Ist der Boden 9 zu uneben, droht eine Abdrift des Transportgutes in Richtung des größten Gefälles. Die Welligkeit des Bodens 9 sollte 2% des Luftkissendurchmessers nicht überschreiten, da sonst die Gefahr besteht, dass sich kein ausreichender Druck in der Auftriebskammer ausbilden kann.

Fugen und Risse treten am häufigsten in Betonböden auf. Diese bewirken dass die Luft unter den Kissen 8 entweichen kann. Die Folge ist, dass das Luftpolster zusammenbricht und ein Transport nicht möglich ist. Die maximale Breite von Fugen und Rissen sollte 0,2 mm nicht überschreiten. Bestehen zwischen den Fugen oder Rissen Höhenunterschiede, die mehr als 0,5 mm sind, sollten diese abgeschliffen werden. Die Steigung bei Luftkissen 8 mit eigenem Antrieb sollte nicht mehr als 0,1 % bis 0,5 % betragen.

Die Figur 2 zeigt eine autonome Luftkissentransportvorrichtung 6 mit einer eigenen
Vorrichtung 11 zur Erzeugung von Druckluft, welche bewegungsgekoppelt mit der Transportvorrichtung 6 verbunden ist. Die Transportvorrichtung umfasst auch einen Druckbehälter 29, in dem die von der Vorrichtung 11 erzeugte Druckluft zwischenspeicherbar ist.

Weiterhin kann die Transportvorrichtung 6 wie im dargestellten Fall einen Energiespeicher 38, z.B. in Form einer Batterie umfassen, mittels dessen Komponenten der Transportvorrichtung 6 mit Energie versorgbar sind.

Im Gegensatz zu der in der Figur 1 dargestellten Variante kann sich das Luftkissensystem gemäß Figur 2 also selbst mit Luft versorgen. Eine Batterie 38 kann einen Kompressor 11 antreiben, der ein Druckgefäß 29 füllt, welches die Luftkissen 8 mit Luft versorgt. Damit ist keine Verbindung mit dem Schlauch 12 wie in Figur 1 mehr erforderlich.

Die Transportvorrichtung 6 umfasst eine Trägervorrichtung 34, z.B. in Form einer Palette, auf welcher eine, oder sogar mehrere Druckplattformen 3 zum Transport anordenbar sind.

Die Transportvorrichtung 6 umfasst eine Steuerungsvorrichtung 15, die dazu eingerichtet ist, die Transportvorrichtung 6 autonom zu bewegen.

Insgesamt handelt es sich bei der Transportvorrichtung 6 gemäß dem in der Figur 2 dargestellten Ausführungsbeispiel um eine fahrerlose, autonom versorgte Transportvorrichtung.

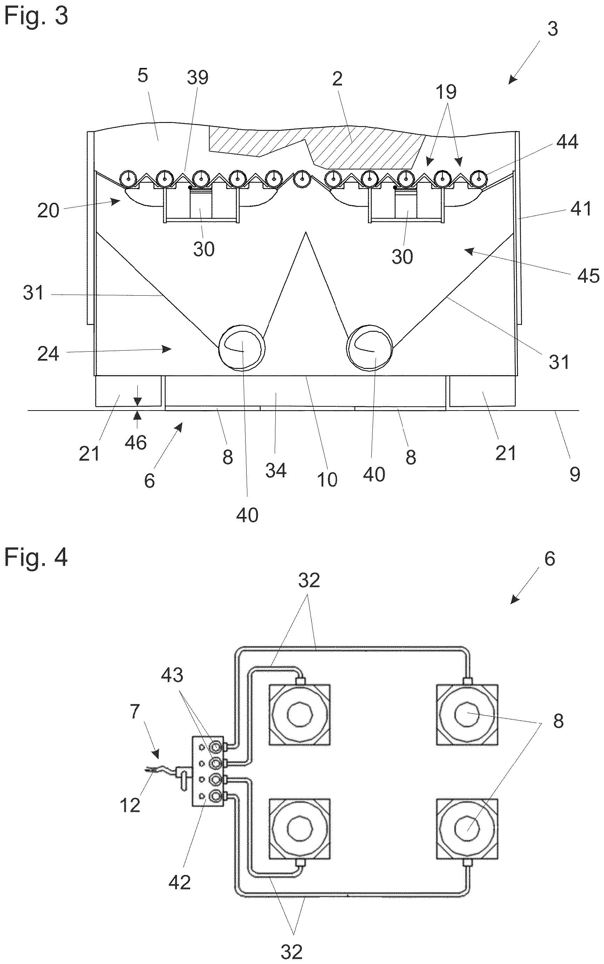

Die Figur 3 zeigt eine Druckplattform 3 gemäß einem ersten Ausführungsbeispiel, wobei die auf einer Transportvorrichtung 6 angeordnet ist.

Die Druckplattform 3 umfasst eine Trägerstruktur 44, auf welcher wenigstens ein dreidimensionales Bauteil 2 im Zuge eines Druckprozesses mittels der Druckvorrichtung 4 ausbildbar ist. Dabei wird mittels wenigstens einer Materialauftragsvorrichtung schichtweise wenigstens ein Partikelmaterial 5 aufgetragen und mittels wenigstens einem Druckkopf an örtlich vorbestimmten Bereichen wenigstens ein Bindemittel abgegeben, um das wenigstens eine Partikelmaterial 5 in den örtlich vorbestimmten Bereichen zu verfestigen und miteinander zum wenigstens einen dreidimensionalen Bauteil 2 zu verbinden. Nach dem Druckprozess ist also wenigstens ein dreidimensionales Bauteil 2 auf der Trägerstruktur 44 angeordnet, wobei das wenigstens eine dreidimensionale Bauteil 2 von nichtgebundenem Partikelmaterial 5 umgeben ist.

Die Druckvorrichtung kann beispielsweise wie in der WO 2018/024836 A1 offenbart ausgebildet sein.

Es können wie in der Figur 3 dargestellt, seitliche Wände 41 vorgesehen sein, die ein seitliches Abfließen von nichtgebundenem Partikelmaterial 5 unterbinden. Es bietet sich an, diese Wände 41 synchron in Abhängigkeit vom Druckfortschritt mitzubewegen.

Die wenigstens eine Druckplattform 3 umfasst Öffnungen 19, über welche das nichtgebundene Partikelmaterial 5 der Druckplattform 3 ableitbar ist, und einen Verschlussmechanismus 20 zum Verschließen der Öffnungen 19.

Die Öffnungen 19 können beispielsweise wie im dargestellten Fall in der Trägerstruktur 44 ausgebildet sein. Die Trägerstruktur 44 kann z.B. gitterförmig ausgebildet sein.

Es kann wie im dargestellten Fall eine Stellvorrichtung 30 vorgesehen sein, mittels welcher der Verschlussmechanismus 20 relativ zu den Öffnungen 19 automatisch verstellbar ist, um die Öffnungen 19 über Verschlusselemente 39 wahlweise zu verschließen oder zu öffnen. Die Verschlusselemente 39 können im Querschnitt zumindest abschnittsweise keilförmig ausgebildet sein.

Es ist eine Vorrichtung 24 zum Abtransport von nichtgebundenem Partikelmaterial 5 vorgesehen, wobei die Vorrichtung 24 zum Abtransport in dem in der Figur 3 dargestellten Ausführungsbeispiel in die Druckplattform 3 integriert ist.

Unterhalb der Trägerstruktur 44 ist ein Abflussraum 45 ausgebildet, wobei Begrenzungselemente, welche den Abflussraum 45 definieren, im Querschnitt bereichsweise in Form eines Trichters 31 angeordnet sind, wodurch das abzuleitende nichtgebundene Partikelmaterial 5 bündelbar ist.

Die Vorrichtung 24 zum Abtransport umfasst weiterhin zwei Trogschnecken 40, mittels derer nichtgebundenes Partikelmaterial abtransportierbar ist.

Bei dieser Ausführungsform wird das nichtgebundene Partikelmaterial 5 also, nachdem es den Verschlussmechanismus 20 passiert hat, von Trichtern 31 aufgefangen und von diesen an Trogschnecken 40 weitergeleitet. Diese Trogschnecken 40 fördern das Partikelmaterial 5 dann weiter zu den nachfolgenden Prozessen in der Fertigungskette. Diese Ausführungform kommt vorzugsweise bei kleinen bis mittelgroßen Produktionsanlagen zum Einsatz.

Die Druckplattform 3 ist über eine Schnittstelle 10 mit der Transportvorrichtung 6 koppelbar ist. Bei der Schnittstelle 10 kann es sich beispielsweise um ebene Kontaktflächen handeln.

Die Druckplattform 3 weist Abstützvorrichtungen 21 zur Abstützung der Druckplattform 3 auf dem Untergrund 9 auf. Die Abstützvorrichtungen 21 können beispielsweise als Eckklötze ausgebildet sein. In einem mit Druckluft beaufschlagten Zustand der Transportvorrichtung 6 sind die Abstützvorrichtungen 21 vom Untergrund 9 über einen Abstand 46 voneinander beabstandet. Sie sind aber auch in einen Zustand bewegbar, in welchem die Abstützvorrichtungen 21 den Untergrund 9 kontaktieren, z.B. um den Druckprozess durchzuführen.

Die Figur 4 zeigt schematisch einen möglichen Aufbau der Luftkissentransportvorrichtung 6.

Die Transportvorrichtung 6 weist eine Druckluftzufuhr 7 und mehrere Luftkissen 8 auf, welche über die Druckluftzufuhr 7 mit Druckluft beaufschlagbar sind, um einen Luftfilm zu einem Untergrund 9 auszubilden.

Die Druckluftzufuhr 7 ist an eine Fluidleitung 12 anschließbar.

Die über die Druckluftzufuhr 7 zuführbare Druckluft steht in Fluidverbindung mit einer Druckregelung 42, welche mehrere, vorzugsweise gesondert ansteuerbare, Ventile 43 umfasst, über welche die Druckluft über Fluidverbindungen 32 den vorgesehenen Luftkissen 8 zuführbar ist.

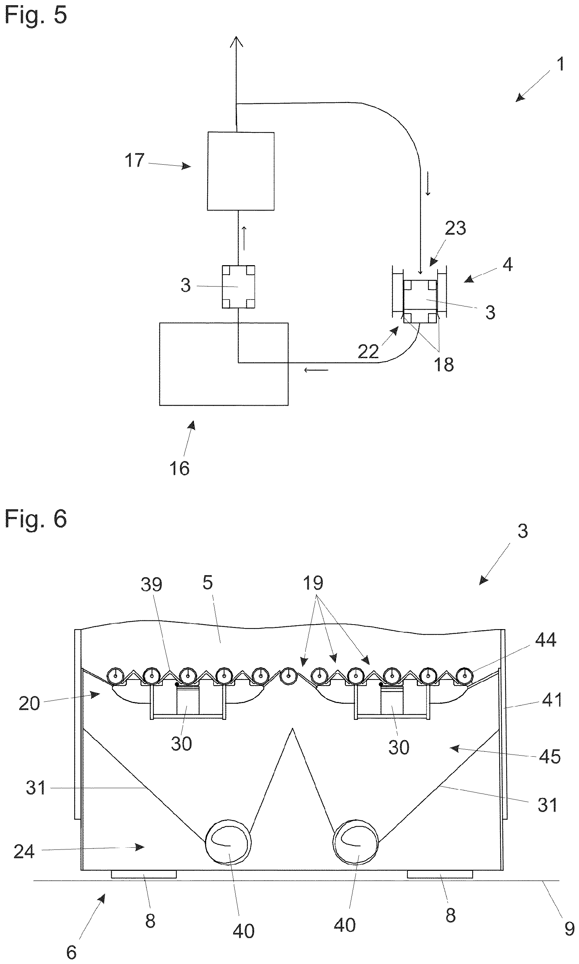

In der Figur 5 ist schematisch eine Anordnung 1 zur Herstellung wenigstens eines dreidimensionalen Bauteils für die Bauindustrie gemäß einem bevorzugten Ausführungsbeispiel dargestellt.

Die Anordnung 1 ist bereichsweise als Umlaufanlage ausgebildet und umfasst mehrere Druckplattformen 3, welche die Umlaufanlage durchlaufen.

Die Anordnung 1 umfasst eine Druckvorrichtung 4, in welcher die Druckplattformen 3 nacheinander oder zugleich zumindest bereichsweise anordenbar sind, um auf ihnen wenigstens ein dreidimensionales Bauteil für die Bauindustrie zu drucken.

Nach dem Abschluss eines Druckvorgangs können die Druckplattformen 3 der Druckvorrichtung 4 mittels wenigstens einer Transportvorrichtung 6 erschütterungsfrei entnommen und weiteren Stationen der Umlaufanlage zugeführt werden.

So weist die Anordnung 1 wenigstens eine Härtekammer 16 auf, in welcher die Druckplattformen 3 zur Aushärtung des wenigstens einen dreidimensionalen Bauteils 2 zwischenspeicherbar sind, und wobei die Druckplattformen 3 mittels der wenigstens einen Transportvorrichtung 6 der wenigstens einen Härtekammer 16 zuführbar und entnehmbar sind.

Weiterhin weist die die Anordnung 1 wenigstens eine Entpackstation 17 auf, in welcher die Druckplattformen 3 zur Entnahme des wenigstens einen dreidimensionalen Bauteils 2, und zum Abtransport von nichtgebundenem Partikelmaterial 5, zwischenspeicherbar sind, und wobei die Druckplattformen 3 mittels der wenigstens einen Transportvorrichtung 6 der wenigstens einen Entpackstation 17 zuführbar und entnehmbar sind.

Im Anschluss an die wenigstens eine Entpackstation 17 kann das wenigstens eine dreidimensionale Bauteil von der entsprechenden Druckplattform 3 entnommen und abtransportiert werden, beispielsweise um mit anderen Bauteilen zusammengebaut und/oder nachbearbeitet zu werden. Die leere Druckplattform 3 wird ggf. einem Reinigungsprozess unterzogen und wieder dem Produktionskreislauf zugeführt.

Insgesamt gesehen ist auf diese Weise eine Fließfertigung realisierbar: Zuerst wird der Transport einer mit noch jungen Bauteilen belegten Druckplattform 3 zwischen dem 3D-Drucker 4 und Härteraum 16 vollführt. Nach einer gewissen Aushärtungszeit wird die Druckplattform 3 weiter zur Entpackstation 17 transportiert, wo sie entpackt wird. Die leere Druckplattform 3 wird dann von der Entpackstation 17 in eine Warteposition und schließlich zurück in den 3D-Drucker 4 manövriert. Die hohe Beweglichkeit und Präzision, sowie der behutsame, vibrationsfreie Bewegungsablauf des Luftkissentransportsystems 6 tragen dabei wesentlich zur vorteilhaften Anwendung im 3D-Druck von Großbauteilen bei.

Um den Umlauf zu gewähren, ist der 3D-Drucker 4 auf zwei gegenüberliegenden Seiten geöffnet, sodass die eine Druckplattform 3 auf einer Seite entnommen und die andere Druckplattform 3 auf der gegenüberliegenden Seite eingeführt werden kann. In anderen Worten weist die Druckvorrichtung 4 einen Ausgang 22, über welchen die wenigstens eine Druckplattform 3 der Druckvorrichtung 4 entnehmbar ist, und einen Eingang 23, über welchen die wenigstens eine Druckplattform 3 der Druckvorrichtung 4 zuführbar ist, auf.

Um das Einfädeln der Druckplattformen 3 in die unterschiedlichen Stationen der Anordnung 1 zu erleichtern, bietet es sich an, dass die Druckvorrichtung 4, die Druckplattformen 3, die wenigstens eine Transportvorrichtung 6, die wenigstens eine Härtekammer 16 und/oder Entpackstation 17 wenigstens eine seitlich angeordnete Führungsvorrichtung 18 zur seitlichen Führung der wenigstens einen Druckplattform 3 aufweist. Die Führungsvorrichtung 18 kann beispielsweise wenigstens eine Führungsschiene, Gleitvorrichtung und/oder Vorrichtung mit Rollen umfassen.

Die Figur 6 zeigt eine Druckplattform 3, bei der wenigstens eine Transportvorrichtung 6 als integraler Bestandteil der Druckplattform 3 ausgebildet ist. In diesem Fall entfällt die Notwendigkeit einer Schnittstelle 10 (vgl. z.B. Figur 3).

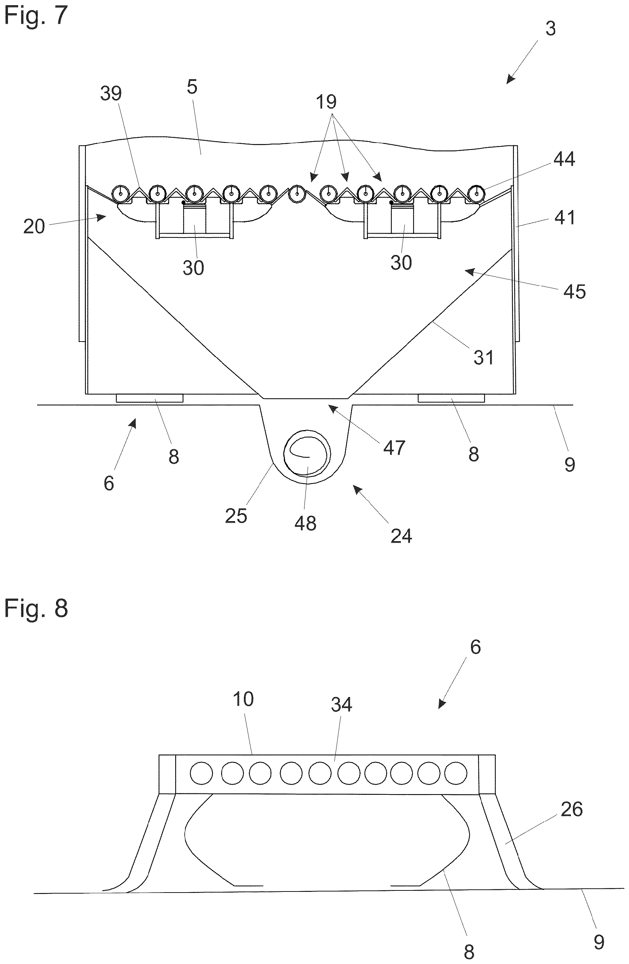

Die Figur 7 zeigt eine Druckplattform 3, die über einer stationär im Untergrund angeordneten Schneckenförderer 48 positioniert ist.

In diesem Fall ist die Vorrichtung 24 zum Abtransport von nichtgebundenem Partikelmaterial 5 also nur zum Teil in die Druckplattform 3 integriert, wobei ein erster Teil der Vorrichtung 24 in Form eines Abflussraums 45 in die Druckplattform 3 integriert ist, und ein zweiter Teil in Form eines Schneckenförderers 48 stationär im oder am Untergrund 9, beispielsweise in einer Ausnehmung 25 im Untergrund 9, angeordnet ist.

Im Vergleich zu dem in den Figuren 3 und 6 dargestellten Ausführungsbeispielen wird im Ausführungsbeispiel gemäß Figur 7 also auf Trogschnecken 40 in der Unterkonstruktion der Druckplattform 3 verzichtet. Das Partikelmaterial 5 passiert den Verschlussmechanismus 20 und wird von den Trichtern 31 aufgefangen und von diesen in eine in den Untergrund 9 integrierte Mulde geleitet. Die Trichter 31 sind in diesem Falle auf ihrer Unterseite mit einer großen Trichteröffnung 47 ausgestattet. In der Mulde befindet sich ein Schneckenförderer 48, welcher das Partikelmaterial 5 den nachfolgenden Prozessen zuführt. Dieses Ausführungsbeispiel kommt vorzugsweise bei Großanlagen mit großem Durchsatzleistungen zur Anwendung, in der mehrere Druckplattformen 3 hintereinander über der Mulde geparkt und entleert werden. Da sich bei einer solchen Anlage viele Druckplattformen 3 im Umlauf befinden, spart man sich die Trogschnecken 40 im Inneren der Druckplattformen 3.

Die Figur 8 zeigt eine Transportvorrichtung 6, welche eine Abschirmvorrichtung 26 aufweist, über welche das wenigstens eine Luftkissen 8 der Transportvorrichtung 6 von Staub und/oder von nichtgebundenem Partikelmaterial 5 abschirmbar ist, wobei die wenigstens eine Abschirmvorrichtung 26 wenigstens eine flexible Schürze, Lamellen und/oder Bürsten umfasst, welche die Transportvorrichtung 6 zumindest teilweise umgeben.

Die Transportvorrichtung 6 weist eine Trägervorrichtung 34 auf, welche beispielsweise ein Hohlprofil aus Aluminium umfassen kann.

## Patentansprüche

1. Anordnung (1) zur Herstellung wenigstens eines dreidimensionalen Bauteils (2) für die Bauindustrie, umfassend
- wenigstens eine Druckplattform (3),
- eine Druckvorrichtung (4) mit wenigstens einer Materialauftragsvorrichtung zur schichtweisen Auftragung wenigstens einen Partikelmaterials (5) auf der Druckplattform (3) und wenigstens einem Druckkopf zur Abgabe wenigstens eines Bindemittels an örtlich vorbestimmten Bereichen, um das wenigstens eine Partikelmaterial (5) in den örtlich vorbestimmten Bereichen zu verfestigen und miteinander zum wenigstens einen dreidimensionalen Bauteil (2) zu verbinden, wobei die wenigstens eine Druckplattform (3) zumindest bereichsweise in der Druckvorrichtung (4) anordenbar ist, und
- wenigstens eine Transportvorrichtung (6) zur Entnahme der wenigstens einen Druckplattform (3) aus der Druckvorrichtung (4),
**dadurch gekennzeichnet, dass** die wenigstens eine Transportvorrichtung (6) wenigstens eine Druckluftzufuhr (7) und wenigstens ein, vorzugsweise wenigstens drei, Luftkissen (8), umfasst, welches über die wenigstens eine Druckluftzufuhr (7) mit Druckluft beaufschlagbar ist, um einen Luftfilm zu einem Untergrund (9) auszubilden, sodass die wenigstens eine Druckplattform (3) erschütterungsfrei der Druckvorrichtung (4) entnehmbar ist.

2. Anordnung (1) nach Anspruch 1, wobei die wenigstens eine Transportvorrichtung (6) als integraler Bestandteil der wenigstens einen Druckplattform (3) ausgebildet ist, oder wobei wenigstens eine Schnittstelle (10) vorgesehen ist, über welche die wenigstens eine Transportvorrichtung (6) mit der wenigstens einen Druckplattform (3) koppelbar ist.

3. Anordnung (1) nach Anspruch 1 oder 2, wobei die Anordnung (1) wenigstens eine Vorrichtung (11) zur Erzeugung von Druckluft umfasst, vorzugsweise wobei
- die wenigstens eine Vorrichtung (11) zur Erzeugung von Druckluft stationär angeordnet ist und über wenigstens eine Fluidleitung (12) mit der wenigstens einen Druckluftzufuhr (7) der wenigstens einen Transportvorrichtung (6) verbunden ist, vorzugsweise wobei die wenigstens eine Fluidleitung (12) zumindest abschnittsweise oberhalb der wenigstens einen Transportvorrichtung (6) angeordnet ist, und/oder wenigstens einen Ausgleichsabschnitt (13) zum Ausgleich einer Dehnung der Fluidleitung (12) in Längsrichtung aufweist, oder
- die wenigstens eine Vorrichtung (11) zur Erzeugung von Druckluft bewegungsgekoppelt mit der wenigstens einen Transportvorrichtung (6) verbunden ist.

4. Anordnung (1) nach einem der vorhergehenden Ansprüche, wobei die wenigstens eine Transportvorrichtung (6) wenigstens einen Antrieb (14) umfasst, über welchen die wenigstens eine Transportvorrichtung (6) relativ zum Untergrund (9) antreibbar ist.

5. Anordnung (1) nach einem der vorhergehenden Ansprüche, wobei wenigstens eine Steuerungsvorrichtung (15) vorgesehen ist, die dazu eingerichtet ist, die wenigstens eine Transportvorrichtung (6) autonom relativ zumindest zur Druckvorrichtung (4) zu bewegen.

6. Anordnung (1) nach einem der vorhergehenden Ansprüche, wobei die Anordnung (1) wenigstens eine Härtekammer (16) umfasst, in welcher die wenigstens eine Druckplattform (3) zur Aushärtung des wenigstens einen dreidimensionalen Bauteils (2) zwischenspeicherbar ist, und wobei die Druckplattform (3) mittels der wenigstens einen Transportvorrichtung (6) der wenigstens einen Härtekammer (16) zuführbar und entnehmbar ist.

7. Anordnung (1) nach einem der vorhergehenden Ansprüche, wobei die Anordnung (1) wenigstens eine Entpackstation (17) umfasst, in welcher die wenigstens eine Druckplattform (3) zur Entnahme des wenigstens einen dreidimensionalen Bauteils (2), und vorzugsweise zum Abtransport von nichtgebundenem Partikelmaterial (5), zwischenspeicherbar ist, und wobei die Druckplattform (3) mittels der wenigstens einen Transportvorrichtung (6) der wenigstens einen Entpackstation (17) zuführbar und entnehmbar ist.

8. Anordnung (1) nach einem der vorhergehenden Ansprüche, wobei die Druckvorrichtung (4), die wenigstens eine Druckplattform (3), die wenigstens eine Transportvorrichtung (6) und/oder wenigstens eine optional vorgesehene Härtekammer (16) und/oder Entpackstation (17) wenigstens eine seitlich angeordnete Führungsvorrichtung (18) zur seitlichen Führung der wenigstens einen Druckplattform (3) aufweist.

9. Anordnung (1) nach einem der vorhergehenden Ansprüche, wobei die wenigstens eine Druckplattform (3) Öffnungen (19), über welche nichtgebundenes Partikelmaterial (5) der wenigstens einen Druckplattform (3) ableitbar ist, und wenigstens einen Verschlussmechanismus (20) zum, vorzugsweise automatischen, Verschließen der Öffnungen (19) aufweist.

10. Anordnung (1) nach einem der vorhergehenden Ansprüche, wobei die wenigstens eine Druckplattform (3) wenigstens eine Abstützvorrichtung (21) zur Abstützung der wenigstens einen Druckplattform (3) auf dem Untergrund (9) aufweist.

11. Anordnung (1) nach einem der vorhergehenden Ansprüche, wobei die Druckvorrichtung (4) einen Ausgang (22), über welchen die wenigstens eine Druckplattform (3) der Druckvorrichtung (4) entnehmbar ist, und vorzugsweise einen Eingang (23), über welchen die wenigstens eine Druckplattform (3) der Druckvorrichtung (4) zuführbar ist, aufweist.

12. Anordnung (1) nach einem der vorhergehenden Ansprüche, wobei wenigstens eine Vorrichtung (24) zum Abtransport von nichtgebundenem Partikelmaterial (5) vorgesehen ist, vorzugsweise wobei die wenigstens eine Vorrichtung (24) zum Abtransport in die wenigstens eine Druckplattform (3) integriert ist oder zumindest bereichsweise in einer Ausnehmung (25) im Untergrund (9) angeordnet ist, und/oder wobei die wenigstens eine Vorrichtung (24) zum Abtransport wenigstens eine Trogschnecke (40) und/oder einen Trichter (31) umfasst.

13. Anordnung (1) nach einem der vorhergehenden Ansprüche, wobei die wenigstens eine Transportvorrichtung (6) wenigstens eine Abschirmvorrichtung (26) aufweist, über welche das wenigstens eine Luftkissen (8) von Staub und/oder von nichtgebundenem Partikelmaterial (5) abschirmbar ist, vorzugsweise wobei die wenigstens eine Abschirmvorrichtung (26) wenigstens eine flexible Schürze, Lamellen und/oder Bürsten umfasst, welche die wenigstens eine Transportvorrichtung (6) zumindest teilweise umgeben.

14. Verfahren zur Herstellung wenigstens eines dreidimensionalen Bauteils (2) für die Bauindustrie in einer Anordnung (1) gemäß einem der vorhergehenden Ansprüche, wobei in einem ersten Verfahrensschritt wenigstens ein dreidimensionales Bauteil (2) auf der wenigstens einen Druckplattform (3) in der wenigstens einen Druckvorrichtung (4) gedruckt wird, und in einem zweiten Verfahrensschritt die wenigstens eine Druckplattform (3) aus der Druckvorrichtung (4) mittels der wenigstens einen Transportvorrichtung (6) erschütterungsfrei entnommen wird.

15. Verwendung wenigstens einer Transportvorrichtung (6), welche wenigstens eine Druckluftzufuhr (7) und wenigstens ein, vorzugsweise wenigstens drei, Luftkissen (8), umfasst, welches über die wenigstens eine Druckluftzufuhr (7) mit Druckluft beaufschlagbar ist, um einen Luftfilm zu einem Untergrund (9) auszubilden, zur Entnahme wenigstens einer Druckplattform (3) aus einer Druckvorrichtung (4) mit wenigstens einer Materialauftragsvorrichtung zur schichtweisen Auftragung wenigstens einen Partikelmaterials (5) auf der Druckplattform (3) und wenigstens einem Druckkopf zur Abgabe wenigstens eines Bindemittels an örtlich vorbestimmten Bereichen, um das wenigstens eine Partikelmaterial (5) in den örtlich vorbestimmten Bereichen zu verfestigen und miteinander zu wenigstens einem dreidimensionalen Bauteil (2) für die Bauindustrie zu verbinden.
